# FASCICULE DE BREVET EUROPEEN

(11) **EP 3 628 728 B1**
(45) Date de publication et mention de la délivrance du brevet: **20.12.2023**
(21) Numéro de dépôt: 19020278.8
(22) Date de dépôt: 09.04.2019
(51) Int. Cl.: C12G 1/06, C12G 1/08, C12G 3/06

(54) **VIN EFFERVESCENT AROMATISE**
AROMATISIERTER SCHAUMWEIN
FLAVOURED SPARKLING WINE

(30) Priorité: 10.04.2018 FR 1870432
(43) Date de publication de la demande: 01.04.2020
(73) Titulaire: Rozoy, Clément, 34000 Montpellier (FR)
(72) Inventeur: Rozoy, Clément, 34000 Montpellier (FR)
(74) Mandataire: Alatis

(56) Documents cités:
- EP-A- 0 313 465
- WO-A1-2016/044377
- RU-C2- 2 258 736
- SANGITA KUMARI ET AL: "EssOilDB: a database of essential oils reflecting terpene composition and variability in the plant kingdom", DATABASE, vol. 2014, 1 janvier 2014 (2014-01-01), XP055522740, DOI: 10.1093/database/bau120 & Kumari ET AL: "EssOilDB - Origanum marjorana", , 1 janvier 2014 (2014-01-01), XP055522747, Extrait de l'Internet: URL:http://nipgr.res.in/Essoildb/essoildb_ 2.html [extrait le 2018-11-12]

## Description

La présente concerne le domaine des vins aromatisés, en particulier les vins effervescents aromatisés aux terpènes.

Le vin est le produit issu de la fermentation alcoolique et de la macération plus ou moins longue de raisins frais. Le vin contient plus de 100 constituants, les deux principaux étant l'eau et l'alcool. Il est très intéressant de connaître une partie des 98 autres lorsqu'on s'intéresse à la dégustation. Outre les sucres, tels que le glucose et le fructose, les acides organiques et inorganiques, tels que les acides tartrique et sulfureux, et les polyphénols, de nombreux composés chimiques, naturellement présents dans le vin, confèrent de nombreuses qualités odorantes, aromatisées et gustatives aux différents types de vins.

Les substances aromatiques sont localisées dans les cellules hypodermiques de la pellicule des baies de raisin. Leur quantité est très faible, mais leur pouvoir aromatique peut-être important. Les arômes dits "primaires" sont présents dans le raisin (leur concentration augmente jusqu'à la maturité, ensuite ils deviennent plus lourds, moins fins), les arômes dits "secondaires" sont formés pendant la fermentation alcoolique, par exemple les arômes dus aux alcools supérieurs, aldéhydes, cétones et esters éthyliques ou amyliques, les acides organiques présents dans la fermentation, et les arômes dits "tertiaires" apparaissent durant le vieillissement du vin et qui sont générés lors d'estérifications lentes entre les acides organiques du vin et l'alcool, de condensations et synthèses spontanées entre des fonctions alcooliques, aldéhydiques, cétoniques et phénoliques. Comme les tanins, les arômes jouent un rôle central dans les vins. Lorsqu'ils sont sous forme liée, ils sont appelés précurseurs d'arômes, ils ne sont pas odorants. Ce sont des enzymes spécifiques qui permettent la libération des arômes. Certaines souches de levures permettent la libération d'arômes spécifiques, tels que présents dans le vin de type beaujolais nouveau.

Les substances aromatiques sont composées notamment par des terpènes, des caroténoïdes, des composés cystéinylés et des pyrazines. Ils peuvent être sous une forme liée ou libre. Certains terpènes, tels que le géraniol, le citronellol, le nérol, le linalol, augmentent durant la maturation puis diminuent ensuite. Lors de la maturation, la teneur en caroténoïdes diminue. Les caroténoïdes, ne donnant pas d'arômes, sont transformés en norisoprénoïdes qui eux sont odorants, par exemple, la β-ionone et la damascénone. Les pyrazines, telles que la 3-isobutyl-2-méthoxypyrazine (IBMP), diminuent au cours de la maturation, très rapidement après la véraison. Elles sont responsables des arômes de poivrons verts rencontrés dans les cépages, notamment le cabernet sauvignon, le cabernet franc, le sauvignon blanc et le merlot. Les dérivés cystéinylés sont les précurseurs de thiols volatils obtenus par action de la levure au cours de la fermentation alcoolique et ce de façon variable suivant la souche et l'espèce de levure. On les trouve dans la pellicule ou dans la pulpe selon les variétés. On peut citer la 4-mercaptopentan-2-one (4MMP), l'acétate de 3-mercaptohexyle (A3MH) et le 3-mercaptohexan-1-ol (3MH) lequel est toujours présent dans les vins de cépage sauvignon blanc. Il existe de nombreuses autres substances aromatiques comme la vanilline à l'odeur de vanille, les acides gras aux odeurs herbacées négatives, les dérivés soufrés (mercaptans) et celles provenant du bois (phénols et furanes).

Parmi les familles de composants chimiques citées plus haut, les terpènes sont une familles de composants présents dans de nombreuses variétés de plantes dont ils sont souvent les constituants odoriférants, et dont on sait depuis longtemps les extraire sous la forme d'huiles essentielles.

De nombreux composés terpéniques sont employés en parfumerie ou dans diverses autres industries, en tant qu'additifs alimentaires, la parfumerie et l'aromathérapie. Certains présentent mêmes des propriétés médicinales et aident à lutter, par exemple, contre les bactéries, les champignons et le stress environnemental.

Les hydrocarbures terpéniques ont pour formules brutes C₁₀H₁₆(monoterpènes), qui peuvent être acycliques, monocycliques et bicycliques, C₁₅H₂₄ (sesquiterpènes), qui peuvent acycliques, monocycliques, bicycliques et tricycliques, C₂₀H₃₂ (diterpènes), C₃₀H₄₈ (triterpènes), ou C₄₀H₆₄ (tétraterpènes) et les polyterpènes. La plupart de ces composés présentent des stéréoisomères, soit du fait de la présence de carbones asymétriques, soit en raison de l'existence de deux configurations (Z et E) pour certaines doubles liaisons. Fréquemment, dans la nature, on ne trouve qu'un stéréoisomère déterminé et, notamment, la forme de ces composés est optiquement active.

Les composés terpéniques oxygénés, dans une acception la plus large incluant par exemple des fonctions alcools, cétones, aldéhydes, oxydes, éthers, ont des chaînes carbonées analogues à celles des hydrocarbures acycliques ou cycliques, mais sont parfois moins insaturés que les hydrocarbures correspondants.

Les terpènes sont par exemple des éléments constitutifs des huiles essentielles lesquelles sont obtenues par des procédés classiques d'extraction, tels que la distillation, l'enfleurage, et l'extraction par des solvants volatils.

On peut citer comme exemples de terpènes présentant des propriétés odorantes :
- le limonène (monoterpène monocyclique) : odeur d'agrumes ;
- le α, β-pinène (monoterpènes bicyliques) : odeur de pins ;
- le myrcène (monoterpène acyclique) : odeur proche de celle du clou de girofle ;
- le farnésène (sesquiterpène acyclique) : odeur de pomme verte ;

Compte tenu des propriétés odoriférantes connues de ces terpènes, le Demandeur a trouvé, au cours de nombreuses recherches, qu'il pouvait être judicieux d'incorporer des terpènes, avantageusement provenant d'huiles essentielles naturelles, à un vin effervescent, voires certaines familles et sous-familles spécifiques de ceux-ci, afin de conférer audit vin des propriétés odorantes et gustatives spécifiques, agréables et améliorées, tout en n'en altérant pas la qualité gustative du vin effervescent en tant que tel, selon des proportions prédéterminées, pour ne pas engendrer une quelconque toxicité à la consommation.

Le document RU 2 258 736 C2 concerne la fabrication d'un vin pétillant aromatisé avec 50-70 mg/L d'un mélange d'huiles essentielles.

Sangita K et al.,« ESSOilDB : a database of essential oils reflecting terpene composition and variability in the plant kingdon », database, vol 2014, 1 janvier 2014, DOI : 10.1093/database/bau120., décrit l'utilisation d'une base de données dans la biologie des terpènes.

EP 0 313 465 A1 décrit l'utilisation d'une levure mutante pour favoriser la production de monoterpènes et de sesquiterpènes particuliers.

WO2016/044377 A1 décrit une méthode pour changer le goût de boissons, dont le vin pétillant, les monoterpènes et de sesquiterpènes étant des arômes possibles dans une liste exhaustive d'arômes.

L'invention concerne donc un vin effervescent obtenu selon une vinification de type traditionnelle, comprenant un mélange d'au moins 20 terpènes ajoutés audit vin, dans lequel les terpènes sont choisis parmi les monoterpènes, en une quantité située dans la gamme de 50% en poids à 75% en poids, les sesquiterpènes, en une quantité située dans la gamme de 25% en poids et 50% en poids, la somme étant égale à 100% en poids, le % en poids étant le pourcent en poids relatif par rapport au poids total du mélange des terpènes, la quantité en ledit mélange de terpènes dans le vin étant comprise entre 0,02 ml et 0,6 ml par litre de vin effervescent.

Le Demandeur a donc mis au point une formule originale de terpènes, lesquels incorporés au vin effervescent confère des propriétés odorantes, aromatisées et gustatives particulières au vin, sans en dénaturer le goût des cépages le consituant.

Sans être lié par une quelconque théorie, le Demandeur a trouvé que ce mélange spécifique de familles de terpènes, la famille des monoterpènes et la famille des sesquiterpènes, dans des concentrations prédéterminées dans le vin, pemettait de préparer des vins effervescents aromatisés ayant des propriétés appréciées des consommateurs, et ce d'autant que des synergies d'interaction entre lesdits terpènes et les divers consituants des vins pourraient en partie expliquer ces propriétés. Par ailleurs, l'interaction entre les monoterpènes et les sesquiterpènes de l'invention, qui peuvent générer des composés de la famille des terpénoïdes, peuvent en outre expliquer l'amélioration des propriétés odorantes et gustatives. Il est bien entendu que les terpènes ajoutés au vin, hormis ceux qui sont déjà présents naturellement dans le vin effervescent, sont choisis de sorte qu'ils confèrent ces propriétés désirées au vin, sans en rechercher nécessairement de quelconques vertus thérapeutiques et sans agir de manière néfaste à l'être humain. Autrement dit, les terpènes de l'invention, ainsi que leurs quantité ajoutées, sont compatibles pour une consommation raisonnée, sans abus de vin effervescent de l'invention.

Hormis les effets gustatifs cités ci-dessus, le volume (ou poids) du mélange de terpènes ajoutés permet une dissolution totale du mélange sans donc conférer un aspect trouble, par exemple de type émulsion, ou biphasique au vin. C'est également un des avantages de l'invention.

Chaque terpène peut être obtenu de plusieurs façons non limitatives : soit par une distillation d'une huile essentielle, soit par un procédé de fractionnement d'huiles essentielles, disponibles dans le commerce, connus dans l'art antérieur. Le mélange desdits terpènes est classiquement effectué par analyse desdits terpènes présents dans des huiles essentielles pour en déterminer les quantités sélectionnées, pour préparer ledit mélange. Chaque huile essentielle contient une certaine teneur en terpènes que l'on sélectionne pour l'incorporation dans le vin effervescent. On peut citer les huiles essentielles suivantes pour l'obtention de monoterpènes seuls et purs, ou en mélange: Angélique archangélique, Cyprès de Provence, Epinette noire, Genévrier commun, Laurier noble, Lentisque pistachier, Niaouli, Origan compact, Pin sylvestre, Sarriette des montagnes, Tea-tree. Un autre exemple est l'huile essentielle de chanvre comprenant le myrcène, le terpinolène, le β-caryophyllène et le trans-β-ocimène, chacun pouvant être isolé pur ou quasiment pur de cette huile par les techniques séparatives indiquées plus haut.

Avantageusement, chaque terpène dans le mélange est d'une pureté ≥ 95%, mieux encore ≥ 98 %, en particulier ≥ 99%.

Les expressions « % en poids » se réfèrent à des pourcents en poids relatif par rapport au poids total du mélange des terpènes. A titre d'exemple non limitatif, 1 g de mélange de terpènes comprend de 0,5 g à 0,75 g de monoterpènes, et de 0,25 g à 0,50 g de sesquiterpènes, la somme étant de 1 g.

Avantageusement selon l'invention, le mélange de terpènes à ajouter au vin pétillant est préparé de sorte à être adapté à une production industrielle. Le mélange peut être produit selon des unités telles que le gramme ou le kilogramme. Par exemple, 100 g de mélange peut comprendre entre 65 g et 70g de monoterpènes et de 30 g à 35 g de sesquiterpènes.

Les terpènes peuvent être utilisés dans un arôme : seuls, purs ou en mélange d'autres composés conférant des propriétés olfactives et odorantes compatibles à être consommés.

Le vin effervescent procure des sensations gustatives et aromatiques très appréciables lorsque le mélange comprend avantageusement de 25 à 220 terpènes, de préférence de 25 à 150, et encore mieux de 30 à 100 terpènes. Il peut être ainsi judicieux d'incorporer un nombre important de terpènes différents procurant une richesse et une diversité de senteurs et de goûts au vin effervescent.

Avantageusement, les terpènes, dans le mélange, comprennent les monoterpènes choisis parmi les sous-familles de monoterpènes acycliques, de monoterpènes monocycliques, de monoterpènes bicycliques, d'alcools monoterpéniques acycliques, d'alcools monoterpéniques monocycliques, d'alcools monoterpéniques bicycliques, de monoterpènes éthercycliques et de cétones monoterpéniques. Les sous-familles de sesquiterpènes sont avantageusement choisies parmi les sesquiterpènes monocycliques, les sesquiterpènes bicycliques, les alcools sesquiterpéniques acycliques et les alcools sesquiterpéniques monocycliques, ou leurs mélanges.

Selon des formes de réalisation préférées, les monoterpènes peuvent en outre comprendre les oxydes de monoterpènes, et les sesquiterpènes peuvent en outre inclure les sesquiterpènes acycliques, les sesquiterpènes tricycliques, les alcools sesquiterpéniques bicycliques, les alcools sesquiterpéniques tricycliques, les oxydes de sesquiterpènes ou les éthers de sesquiterpènes, ou leurs mélanges.

D'une façon générale, l'expression « les monoterpènes sont ajoutés en une quantité située dans la gamme allant de x% en poids à y% en poids, les sesquiterpènes étant ajoutés en une quantité située dans la gamme allant de a% en poids à b% en poids » signifie également que le mélange des terpènes ajouté au vin comprend des monoterpènes en une quantité de x% en poids à y% en poids et a%en poids à b% en poids de sesquiterpènes, la somme étant de 100%.

Avantageusement, les monoterpènes sont ajoutés en une quantité située dans la gamme allant de 55% en poids à 75% en poids, les sesquiterpènes étant ajoutés en une quantité située dans la gamme allant de 30% en poids à 50% en poids, de façon plus avantageuse de 30% en poids à 45% en poids, la somme étant égale à 100% en poids.

Selon des formes de réalisation particulières, les monoterpènes sont ajoutés en une quantité située dans la gamme allant de 65% en poids à 75% en poids, les sequiterpènes étant ajoutés en une quantité allant de 25% en poids à 35% en poids, la somme étant égale à 100% en poids.

Selon d'autre formes de réalisation particulières, les monoterpènes sont ajoutés en une quantité située dans la gamme allant de 50% en poids à 55% en poids, les sequiterpènes étant ajoutés en des quantités allant 45% en poids à 50% en poids, la somme étant égale à 100% en poids.

Selon d'autres formes de réalisation, les gammes de pourcentages en poids de monoterpènes et sesquiterpènes peuvent être toutes combinaison de celles définies ci-dessus.

Le Demandeur a trouvé que, par des essais gustatifs de vins effervescents aromatisés, réalisés auprès de personnes de son entreprise, que des sensations gustatives et aromatiques du vin sont nettement appréciables lorsque le mélange de terpènes contient typiquement un pourcentage relatif majoritaire (supérieur à 50%) en monoterpènes acycliques, monocycliques, bicyliques et en alcools monoterpèniques acycliques par rapport au reste des monoterpènes, toutes choses étant égales par ailleurs ; il en est de même des sesquiterpènes monocycliques, bicycliques, et des alcools sesquiterpèniques acycliques et monocycliques, par rapport au reste des sesquiterpènes. On entend par pourcentage relatif la quantité de composés d'une même sous-famille par rapport au total des composés représentatifs de la famille présente dans le mélange de terpènes.

Plus particulièrement, selon des exemples de mise en oeuvre, dans le mélange de terpènes, le pourcentage relatif des monoterpènes acycliques peut varier de 11% à 13% ; le pourcentage relatif des monoterpènes monocycliques peut varier de 12% à 25%, de préférence de 15% à 25%, le pourcentage relatif des monoterpènes bicycliques peut varier de 17% à 25% ; le pourcentage relatif des alcools monoterpéniques acycliques peut varier de 14% à 25%, de préférence de 17% à 25% ; le pourcentage relatif des alcools monoterpéniques monocycliques peut varier de 6% à 9% ; le pourcentage relatif des alcools monoterpéniques bicycliques peut varier de 6% à 9% ; le pourcentage relatif des monoterpènes éther-cycliques peut varier de 3% à 6% ; le pourcentage relatif des oxydes de monoterpènes peut varier de 0% à 9%, la somme des pourcentages relatifs étant de 100%.

De même, le pourcentage relatif des sesquiterpènes acycliques peut varier de 0% à 6%, le pourcentage relatif des sesquiterpènes monocycliques peut varier de 18% à 22%, le pourcentage relatif des sesquiterpènes bicycliques peut varier de 20% à 45%, de préférence de 25% à 43%, le pourcentage relatif des sesquiterpènes tricycliques peut varier de 0% à 10%, le pourcentage relatif des alcools sesquiterpèniques acycliques peut varier de 20% à 40%, de préférence de 25% à 35% ; le pourcentage relatif des alcools sesquiterpèniques monocycliques peut varier de 5% à 20%, le pourcentage relatif des alcools sesquiterpèniques bicycliques peut varier de 0% à 3% ; le pourcentage relatif des oxydes de sesquiterpènes peut varier de 0% à 6%, le pourcentage relatif des éthers de sesquiterpènes peut varier de 0% à 3%, la somme des pourcentages relatif étant de 100%.

Afin de présenter une vin effervescent aux terpènes de l'invention, avec les propriétés désirées, la quantité en ledit mélange de terpènes dans le vin peut être comprise entre 0,03 ml et 0,40 ml par litre de vin effervescent, de façon plus préférée entre 0,04 ml et 0,15 ml par litre de vin effervescent.

Il est très avantageux de choisir les terpènes spécifiques parmi la liste suivante, non limitative.
- Monoterpènes acycliques : le β-myrcène, les α et β-ocimènes ;
- Monoterpènes monocycliques : le terpinolène, les α et γ-terpinènes, le p-menthène, le p-cymène, le D-limonène, le α-phellandrène ;
- Monoterpènes bicycliques : les α et β-pinènes, le α-tuyène, le camphène, le 3-carène, le (R)(+)-sabinène et le (S)(-)-sabinène, le hashishène.
- Alcools monoterpéniques acycliques : le géraniol, le nérol (cis-géraniol), le citronellol, l'ipsdiénol et le linalool ;
- Alcools monoterpéniques monocycliques : le α-terpinéol, le terpinène-4-ol, le pipéridol ;
- Alcools monoterpéniques bicycliques : le α-fenchol et le bornéol et 4-thujanol ;
- Monoterpènes éther-cycliques : l'eucalyptol ;
- Monoterpènes cétoniques : le camphre et la fenchone ;
- Oxydes monoterpéniques : les oxydes des α et β-ocimènes et l'oxyde de terpinolène ;
- Sesquiterpènes acycliques : le α-farnésène, le trans-β-farnésène ;
- Sesquiterpènes monocycliques : les α et γ-élémènes, le α-humulène, le β-curcumène, le β-bisabolène, le β-sesquiphellandrène et le germacrène ;
- Sesquiterpènes bicycliques : le α-bergamotène, le α-bulnésène, le α-santalène, le α-sélinène, le γ-sélinène, le guaïadiène,le β-caryophyllène, le calaménène, le Δ-cardinène, le γ-muurolène, le γ-cardinène, l'isocaryophyllène, le valencène, le α-guaiène, le sélina-4,11-diène ;
- Sesquiterpènes tricycliques : le α-copaène, le α-ylangène, l'aromadendrène et le β-cédrène ;
- Alcools sesquiterpéniques acycliques : le nérolidol, le farnésol ;
- Alcools sesquiterpéniques monocycliques : le α-bisabolol ;
- Alcools sesquiterpéniques bicycliques : le lédol ;
- Alcools sesquiterpéniques tricycliques : le spathulénol ;
- Oxydes sesquiterpéniques : oxyde d'isocaryophyllène et l'oxyde d'humulène ;
- Sesquiterpènes éthers : le sequicinéole.

Il ressort de ces différents paramètres : nature des monoterpènes et sesquiterpènes, leux nombre dans le mélange, leur proportion relative et leur concentration/poids dans le vin, qu'il peut être mis à disposition des vins effervescents aromatisés ayant des propriétés gustatives adaptées aux désirs du consommateur. On peut, par exemple, proposer un vin effervescent ayant un goût moins prononcé ou plus prononcé, plus marqué en terpènes floraux ou en terpènes donnant un goût d'agrumes etc.

Le vin effervescent selon l'invention peut en outre comprendre des composés non terpéniques présents dans le mélange à ajouter au vin, en des quantités de préférence comprises entre 1% en poids et 5% en poids, tels que des aldéhydes, par exemple l'acétate d'hexyle, l'octanal, le nonanal ou le décanal, le 2-pentylfurane, connus pour leurs arômes, ou bien encore de cétones, des alcools, des éthers, et/ou des esters, comptatibles pour être consommables par un être humain. Dans ce cas, dans le mélange de terpènes, le pourcentage en poids relatif des terpènes est tel que défini plus haut.

Dans le cadre de l'invention, le vin effervescent est avantageusement obtenu par vinification traditionnelle et provient donc de raisins blancs ou de tout raisin permettant l'application de cette méthode traditionnelle. Tout cépage peut convenir, tel que le Pinot Noir, le Meunier, le Chardonnay, le Gamay, l'Aligoté, le Melon, le Sacy, le pinot blanc, le pinot gris, le pinot noir, le riesling, l'auxerrois, sans contrainte de proportions. Les vins effervescents français les plus connus sont les vins de Champagne, la blanquette de Limoux, les crémants de Loire, de Bourgogne, de Jura, d'Alsace et de Bordeaux, ou encore la clairette de Die. D'autres vins effervescents sont également produits dans le Bugey sous l'appellation Cerdon et dans le Gaillacois. L'Espagne produit également des cavas. De nombreux vins mousseux (« *spumante* ») et pétillants (« *frizzante* ») sont également élaborés en Italie et sur la côte ouest des États-Unis.

En France, on trouve aussi des « vins mousseux de qualité produits dans des régions délimitées » (VMQPRD), ce sont des mousseux ne provenant pas des régions autorisées ou ne suivant pas complètement les décrets des appellations. Cependant, ils peuvent également donner des produits de qualité, dans des gammes de prix comparables, voire plus abordables du fait de leur moindre notoriété. Le vin effervescent n'est pas limité aux vins blancs, mais peut-être du vin rosé effervescent, voire même du vin rouge effervescent obtenu selon des méthodes classiques pour ces types de vins, connus de l'art antérieur.

La méthode traditionnelle est une méthode d'élaboration de vins effervescents qui consiste en une seconde fermentation en bouteilles d'un vin tranquille après ajout d'une liqueur de tirage. La méthode traditionnelle d'élaboration d'un vin effervescent est identique à la méthode champenoise pour l'élaboration du champagne.

Les étapes de la vinification d'un vin effervescent en méthode traditionnelle sont typiquement les suivantes :
1) Vinification des vins de bases tranquilles. Après la vendange, les raisins sont vinifiés séparément cépages par cépages en vins blancs. Cette première fermentation est faite en cuve. Les vins obtenus sont dits vins de base tranquilles (non effervescents).
2) Elaboration de la cuvée. Les vins de base tranquilles sont ensuite assemblés dans des cuves. L'assemblage des vins tranquilles est appelé élaboration de la cuvée. La cuvée est l'assemblage de différents vins tranquilles issus de cépages différents et de parcelles différentes.
3) Le tirage. Une liqueur de tirage (solution de sucre de canne, typiquement de 20 à 24 g/l, et de levures) est ajoutée à la cuvée avant la mise en bouteilles. On tire le vin des cuves, on le met en bouteilles avec un bouchon. Les bouteilles sont mises sur lattes.
4) Une seconde fermentation se faisant en bouteilles. Dans son logement de verre, sous l'action des levures, le sucre apporté par la liqueur de tirage se transforme en alcool avec production de gaz carbonique qui, se dissout dans le vin et donnera la mousse et les bulles : c'est la prise de mousse. Les bouteilles restent sur lattes pendant une durée variable selon les règlements en vigueur de l'appellation, afin que le vin se nourrisse des lies de fermentation.
5) Le dosage. Les levures se transforment, libèrent des arômes et laissent un dépôt. Une opération de remuage des bouteilles ramène le dépôt dans le col de la bouteille sous le bouchon. On dégorge la bouteille (on supprime ainsi le dépôt de levure), puis on ajoute une liqueur d'expédition (mélange de vin vieux et de sucre de canne) pour combler le volume du dépôt supprimé : c'est le dosage. Selon le pourcentage de sucre contenu dans la liqueur d'expédition, on obtiendra un vin effervescent brut, demi-sec ou doux.

Le vin effervescent est obtenu avantageusement par vinification dite de type traditionnelle. Le Demandeur a ainsi adapté cette méthode de vinification pour l'incorporation du mélange de terpènes selon l'invention, car c'est l'une des méthodes de vinification qui évite de rendre le vin effervescent trouble ou qui évite le présence de plusieurs phases par non dissolution des terpènes dans le vin effervescent et qui offre, enfin, le meilleure gage de stabilité et d'homogénéité de répartition du mélange de terpènes dans ledit vin.

Par conséquent, un autre aspect de l'invention est une méthode de vinication traditionnelle d'un vin effervescent comprenant les étapes suivantes de vinification de raisin en des vins de base tranquilles, d'élaboration de la cuvée, d'addition d'une liqueur de tirage, de deuxième fermentation, de remuage et de dégorgement de bouteille, caractérisé en ce qu'il comprend, après l'étape de dégorgement, une étape d'ajout d'une liqueur d'expédition comprenant le mélange de terpènes de l'invention.

De préférence, la liqueur d'expédition comprend une quantité prédéterminée en sucre, typiquement entre 9 et 12 g, une dose de vin et le mélange de terpènes selon l'invention, de sorte que la quantité en ledit mélange de terpènes dans le vin soit comprise entre 0,02 ml et 0,6 ml par litre de vin effervescent.

La liqueur d'expédition avant son ajout aux bouteilles est agitée puis filtrée afin d'assurer que le vin effervescent final ne soit pas trouble.

L'invention concerne également une utilisation d'un mélange d'au moins 20 terpènes dans laquelle les terpènes sont choisis parmi les monoterpènes, en une quantité située dans la gamme de 50% en poids à 75% en poids, les sesquiterpènes, en une quantité située dans la gamme de 25% en poids et 50% en poids, la somme étant égale à 100% en poids, le % en poids étant le pourcent en poids relatif par rapport au poids total du mélange des terpènes, pour la fabrication d'un vin effervescent obtenu par vinification traditionnelle, la quantité en ledit mélange de terpènes dans ledit vin étant comprise entre 0,02 ml et 0,6 ml par litre de vin effervescent.

Les autres variantes en concentrations et en proportions des terpènes, telles que décrites précédemment, s'appliquent ici également. Les terpènes proviennent de préférence d'huiles essentielles, telles que décrites plus haut.

D'autres méthodes de préparation de vins effervescents et d'ajout du mélange de terpènes selon l'invention dans du vin effervescent peuvent être utilisées, connues dans l'art antérieur, telles que celles qui suivent. Elles sont mises en oeuvre par des dispositifs classiques largement connus de l'homme du métier.

Un autre aspect concerne une méthode de fermentation en cuve close d'un vin effervescent comprenant les étapes suivantes de mélange de vins de base dans des cuves en acier inoxydable à des levures et à une liqueur de fermentation, de fermentation contrôlée et pendant un minimum de trois semaines, jusqu'à ce que la pression atteigne le seuil de 5 bars, une étape de cessation de la fermentation par un refroidissement, de filtration et de transfert dans des cuves de tirage, caractérisé en ce qu'il comprend une étape d'ajout du mélange de terpènes de l'invention, pendant l'étape de mélange des vins de base à ladite liqueur de fermentation.

Plus précisément et de manière non limitative, la méthode de fermentation en cuve close, appelée méthode Charmat de seconde fermentation, transforme dans une cuve un vin tranquille en vin effervescent. Cette méthode fait appel aux mêmes principes que la méthode champenoise ou traditionnelle avec cependant une différence significative : la prise de mousse se déroule dans une cuve sous haute pression et non en bouteille, ce qui permet la clarification finale du vin en vrac. Au départ, les vins de base, ou les vins tranquilles, sont mélangés dans des cuves en acier inoxydable, de préférence de grandes tailles, appelées autoclaves, à des levures et à une liqueur de fermentation. C'est à ce moment-là que le mélange de terpènes de l'invention est ajouté. La fermentation est strictement contrôlée et dure de préférence un minimum de trois semaines, jusqu'à ce que la pression atteigne le seuil typique de 5 bars à l'instar du vin de champagne. Elle est alors stoppée par le refroidissement, typiquement à des températures comprises entre -1°C et -5°C. La fermentation est terminée. Comme la cuve est fermée, le dioxyde de carbone produit lors de cette deuxième fermentation n'a pu s'échapper. Le vin effervescent est ensuite filtré puis transféré dans des cuves de tirage où il est conservé jusqu'à l'embouteillage. Le filtrage est nécessaire pour éliminer les particules en suspension issues de la fermentation, telles que les levures.

Un autre aspect concerne une méthode de préparation d'un vin effervescent comprenant une étape d'ajout de gaz carbonique (CO₂) dans du vin de base préalablement stabilisé et réfrigéré contenant en outre le mélange de terpènes de l'invention, une étape de dissolution du CO₂ dans le vin, et une étape de mise en bouteille dudit vin effervescent. Plus typiquement et de façon non limitative, selon la méthode d'ajout de CO₂ ou gazéification, le gaz carbonique est apporté en continu dans la veine de vin préalablement stabilisé et réfrigéré, par exemple à -2 °C, contenant en outre le mélange de terpènes de l'invention. Ledit vin, de préférence le vin blanc ou tout autre vin permettant d'obtenir du vin effervescent, est obtenu selon des méthodes classiques de vinification. Le processus se déroule typiquement en continu. Le gaz carbonique provient par exemple d'une cuve de réserve contenant du gaz sous haute pression. Il est détendu et introduit proportionnellement au vin dans un dispositif de type saturateur. Un élément en métal fritté à porosité très fine, de préférence une capsule, permet de diviser le gaz très finement. Le gaz se dissout instantanément et en grande partie dans les vins. L'excès de gaz se comprime et donnera l'effervescence à l'ouverture de la bouteille. À la sortie du dispositif de type saturateur, le vin est immédiatement mis en bouteille, notamment grâce à une tireuse isobarométrique.

Encore un autre aspect est une méthode de préparation d'un vin effervescent comprenant une étape d'ajout de sucre, de levures et du mélange de terpènes de l'invention à un vin de base et une étape de maintien dudit vin ainsi obtenu à une température ambiante, pour aboutir à un processus de prise mousse, une étape de réfrigération d'un vin effervescent obtenu par l'étape précédente, puis une étape de filtration dudit vin effervescent. De préférence, selon cette méthode de cuve close, un vin, de préférence le vin blanc ou tout autre vin permettant d'obtenir du vin effervescent, obtenu selon des méthodes classiques de vinification, additionné de sucre, de levures et du mélange de terpènes de l'invention est maintenu à une température ambiante, par exemple de 15°C à 25°C. La prise de mousse ne dure typiquement pas plus de 10 jours. Aussitôt la prise de mousse terminée, le vin devenu mousseux est réfrigéré typiquement à des températures comprises entre -1°C et -5°C, pour le stabiliser et limiter l'effervescence ; puis il est filtré à basse température, remis dans une cuve tampon avec son gaz carbonique, puis mis en bouteille notamment grâce à une tireuse isobarométrique.

Selon des modes préférentiels de réalisation, dans les méthodes citées ci-avant l'ajout du mélange de terpènes à un vin effervescent peut comprendre une étape de mise à l'échelle nanométrique dudit mélange de terpènes. Plus précisément et de façon non limitative, le mélange de terpènes peut être réduit à une taille nanométrique typiquement grâce à un homogénéisateur à haute pression, et peut donc être parfaitement miscibles à l'alcool, ce qui conduit à une émulsion stable dudit mélange de terpènes dans du vin effervescent.

### Exemples de réalisation

### Exemple 1

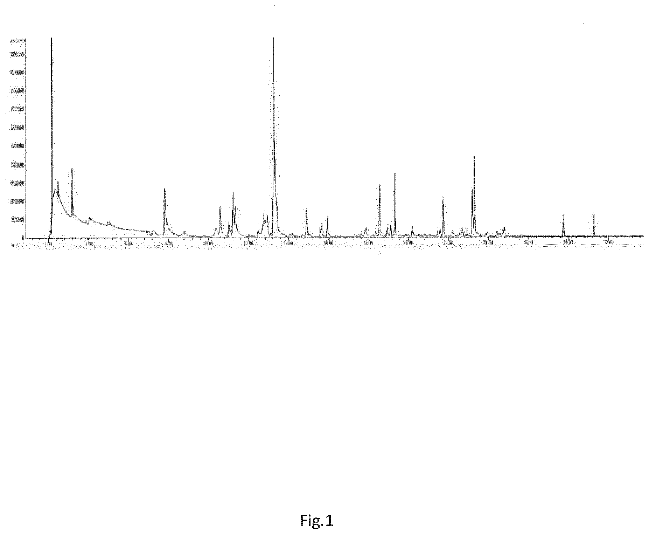

La Figure 1 représente un chromatogramme obtenu par chromatographie en phase gazeuse couplée à une analyse par spectrométrie de masse d'un échantillon de vin pétillant à base de cépages Chardonnay, obtenu par une vinification traditionnelle développée ci-avant, contenant un mélange d'environ 20 terpènes.

L'extraction des terpènes notamment est réalisée par fibre grise DVB/CAR/PDMS SPME (Solid Phase Microextraction). Ils sont ensuite désorbés dans l'injecteur et soumis à l'analyse par chromatographie phase gazeuse sur colonne AGILENT HP-5MS, couplée à un détecteur à spectrométrie de masse (mode SIM/SCAN). (Impact électronique, mode Trace / Détecteur : 500 V / Courant d'émission : 100 µA / Température source : 200°C). Les pics chromatographiques observés sont comparés à la base de données spectrales NIST.

### Résultats

Seuls sont identifiés sur le chromatogramme de la Figure 1, les pics dont le spectre de masse permet une identification des molécules avec un pourcentage de reconnaissance supérieur à 50 % dans la base de données NIST.

### Composés identifiés

Linalol, camphre, isomères de terpinéol, oxyde de nérol, isobornéol, bornéol, carvo menthol, nérol, citronellol, géraniol, bêta ionone, caryophyllène, muurolène, alpha himachalène, alpha pinène, sabinène, bêta myrcène, D limonène, terpinolène, fenchol et eucalyptol.

Les terpènes identifiés dans le chrommatogramme font individuellement partie des composés terpéniques de l'invention.

### Exemple 2

La Tableau 1 représente un exemple de mélange de 35 terpènes selon l'invention.

| Produit | Poids (g) | Famille |
|---|---|---|
| 1-4 Cinéol | 0,001 | Monoterpène |
| Décanal | 0,110 | Aldéhyde |
| Aldéhyde en C8 | 0,073 | Aldéhyde |
| Allo-aromadendrène | 0,011 | Sesquiterpène |
| Camphène | 0,001 | Monoterpène |
| Carvéol | 0,194 | Monoterpène |
| Carvone Laevo | 0,100 | Monoterpène |
| 1,8-Cinéole | 0,020 | Monoterpène |
| E-β-ocimène | 0,065 | Monoterpène |
| Fenchol | 3,828 | Monoterpène |
| Gamma Terpinéol | 0,730 | Monoterpène |
| Géraniol | 0,220 | Monoterpène |
| Acétate de géranyle | 1,650 | Monoterpène |
| 1,2-époxyde d'humulène | 0,005 | Sesquiterpène |
| Limonène | 10,77 | Monoterpène |
| Linalol | 6,900 | Monoterpène |
| Myrcène | 34,52 | Monoterpène |
| Nérolidol | 5,720 | Sesquiterpène |
| Nonanal | 0,001 | Aldéhyde |
| Oxyde de caryophyllène | 0,023 | Sesquiterpène |
| Oxyde de limonène | 0,242 | Monoterpène |
| Paracymène | 0,002 | Monoterpène |
| Sabinène | 0,121 | Monoterpène |
| Terpinén-4-ol | 0,044 | Monoterpène |
| Terpinolène | 3,860 | Monoterpène |
| Z-β-farnésène | 0,032 | Monoterpène |
| Z-β-ocimène | 0,001 | Monoterpène |
| α-caryophyllène | 0,013 | Sesquiterpene |
| α-terpinéol | 2,728 | Monoterpène |
| α-humulène | 0,087 | Sesquiterpène |
| α-pinène | 0,300 | Monoterpène |
| α-sélinène | 0,012 | Sesquiterpène |
| α-terpinène | 0,001 | Monoterpène |
| α-trans-bergamotène | 0,021 | Sesquiterpène |
| β-caryophyllène | 24,20 | Sesquiterpène |
| β-pinène | 2,777 | Monoterpène |
| β-terpinéol | 0,616 | Monoterpène |
| γ-terpinène | 0,002 | Monoterpène |
| | Poids total : 100,00 g | |

Il est ensuite prélevé 0,5 ml de ce mélange qui est ajouté à un vin pétillant, par exemple au cours d'une étape de vinification, telle que décrite plus haut. Les terpènes cités dans le Tableau 1 font individuellement partie des composés terpéniques de l'invention.

## Revendications

1. Vin effervescent obtenu selon une vinification de type traditionnelle, comprenant un mélange d'au moins 20 terpènes ajoutés audit vin, dans lequel les terpènes sont choisis parmi les monoterpènes, en une quantité située dans la gamme de 50% en poids à 75% en poids, les sesquiterpènes, en une quantité située dans la gamme de 25% en poids et 50% en poids, la somme étant égale à 100% en poids, le % en poids étant le pourcent en poids relatif par rapport au poids total du mélange des terpènes, la quantité en ledit mélange de terpènes dans le vin étant comprise entre 0,02 ml et 0,6 ml par litre de vin effervescent.

2. Vin effervescent selon la revendication 1, dans lequel les terpènes dans le mélange comprennent les monoterpènes choisis parmi les sous-familles de monoterpènes acycliques, de monoterpènes monocycliques, de monoterpènes bicycliques, d'alcools monoterpéniques acycliques, d'alcools monoterpéniques monocycliques, d'alcools monoterpéniques bicycliques, de monoterpènes éthercycliques et de cétones monoterpéniques, les sous-familles de sesquiterpènes étant chosies parmi les sesquiterpènes monocycliques, les sesquiterpènes bicycliques, les alcools sesquiterpéniques acycliques et les alcools sesquiterpéniques monocycliques, ou leurs mélanges.

3. Vin effervescent selon la revendication 1 ou 2, dans lequel les monoterpènes comprennent en outre les oxydes de monoterpènes, et les sesquiterpènes comprennent en outre les sesquiterpènes acycliques, les sesquiterpènes tricycliques, les alcools sesquiterpéniques bicycliques, les alcools sesquiterpéniques tricycliques, les oxydes de sesquiterpènes ou les éthers de sesquiterpènes, ou leurs mélanges.

4. Vin effervescent selon l'une quelconque des revendications 1 à 3, dans lequel les monoterpènes sont ajoutés en une quantité située dans la gamme allant de 55% en poids à 75% en poids, les sesquiterpènes étant ajoutés en une quantité située dans la gamme allant de 30% en poids à 50% en poids, de façon plus avantageuse de 30% en poids à 45% en poids, la somme étant égale à 100% en poids.

5. Vin effervescent selon l'une quelconque des revendications 1 à 3, dans lequel les monoterpènes sont ajoutés en une quantité située dans la gamme allant de 65% en poids à 75% en poids, les sequiterpènes étant ajoutés en une quantité allant de 25% en poids à 35% en poids, la somme étant égale à 100% en poids.

6. Vin effervescent selon l'une quelconque des revendications 1 à 3, dans lequel les monoterpènes sont ajoutés en une quantité située dans la gamme allant de 50% en poids à 55% en poids, les sequiterpènes étant ajoutés en des quantités allant 45% en poids à 50% en poids, la somme étant égale à 100% en poids.

7. Vin effervescent selon l'une quelconque des revendications 1 à 6, dans lequel dans le mélange de terpènes, le pourcentage relatif des monoterpènes acycliques varie de 11% à 13% ; le pourcentage relatif des monoterpènes monocycliques varie de 12% à 25%, de préférence de 15% à 25%, le pourcentage relatif des monoterpènes bicycliques varie de 17% à 25% ; le pourcentage relatif des alcools monoterpéniques acycliques varie de 14% à 25%, de préférence de 17% à 25% ; le pourcentage relatif des alcools monoterpéniques monocycliques varie de 6% à 9% ; le pourcentage relatif des alcools monoterpéniques bicycliques varie de 6% à 9% ; le pourcentage relatif des monoterpènes éther-cycliques varie de 3% à 6% ; le pourcentage relatif des oxydes de monoterpènes varie de 0% à 9%, la somme des pourcentages relatifs étant de 100%.

8. Vin effervescent selon l'une quelconque des revendications 1 à 7, dans lequel, dans le mélange de terpènes, le pourcentage relatif des sesquiterpènes acycliques varie de 0% à 6%, le pourcentage relatif des sesquiterpènes monocycliques varie de 18% à 22%, le pourcentage relatif des sesquiterpènes bicycliques varie de 20% à 45%, de préférence de 25% à 43%, le pourcentage relatif des sesquiterpènes tricycliques varie de 0% à 10%, le pourcentage relatif des alcools sesquiterpèniques acycliques varie de 20% à 40%, de préférence de 25% à 35% ; le pourcentage relatif des alcools sesquiterpèniques monocycliques varie de 5% à 20%, le pourcentage relatif des alcools sesquiterpèniques bicycliques varie de 0% à 3% ; le pourcentage relatif des oxydes de sesquiterpènes varie de 0% à 6%, le pourcentage relatif des éthers de sesquiterpènes varie de 0% à 3%, la somme des pourcentages relatif étant de 100%.

9. Vin effervescent selon l'une quelconque des revendications 1 à 8, dans lequel, la quantité en ledit mélange de terpènes dans le vin est comprise entre 0,03 ml et 0,40 ml par litre de vin effervescent, de façon plus préférée entre 0,04 ml et 0,15 ml par litre de vin effervescent.

10. Méthode de vinication traditionnelle d'un vin effervescent comprenant les étapes suivantes de vinification de raisin en des vins de base tranquilles, d'élaboration de la cuvée, d'addition d'une liqueur de tirage, de deuxième fermentation, de remuage et de dégorgement de bouteille, **caractérisé en ce qu'**il comprend, après l'étape de dégorgement, une étape d'ajout d'une liqueur d'expédition comprenant le mélange de terpènes, tel que défini selon l'une quelconque des revendications 1 à 9.

11. Méthode de fermentation en cuve close d'un vin effervescent comprenant les étapes suivantes de mélange de vins de base dans des cuves en acier inoxydable à des levures et à une liqueur de fermentation, de fermentation contrôlée et pendant un minimum de trois semaines, jusqu'à ce que la pression atteigne le seuil de 5 bars, une étape de cessation de la fermentation par un refroidissement, de filtration et de transfert dans des cuves de tirage, **caractérisé en ce qu'**il comprend une étape d'ajout du mélange de terpènes, tel que défini selon l'une quelconque des revendications 1 à 9, pendant l'étape de mélange des vins de base à ladite liqueur de fermentation.

12. Méthode de préparation d'un vin effervescent comprenant une étape d'ajout de gaz carbonique (CO₂) dans du vin de base préalablement stabilisé et réfrigéré, contenant le mélange de terpènes, tel que défini selon l'une quelconque des revendications 1 à 9, une étape de dissolution du CO₂ dans le vin, et une étape de mise en bouteille dudit vin effervescent.

13. Méthode de préparation d'un vin effervescent comprenant une étape d'ajout de sucre, de levures et du mélange de terpènes, tel que défini selon l'une quelconque des revendications 1 à 9, à un vin de base et une étape de maintien dudit vin ainsi obtenu à une température ambiante, pour aboutir à un processus de prise mousse, une étape de réfrigération d'un vin effervescent obtenu par l'étape précédente, puis une étape de filtration dudit vin effervescent.

14. Utilisation d'un mélange d'au moins 20 terpènes dans laquelle les terpènes sont choisis parmi les monoterpènes, en une quantité située dans la gamme de 50% en poids à 75% en poids, les sesquiterpènes, en une quantité située dans la gamme de 25% en poids et 50% en poids, la somme étant égale à 100% en poids, le % en poids étant le pourcent en poids relatif par rapport au poids total du mélange des terpènes, pour la fabrication d'un vin effervescent obtenu par vinification traditionnelle, la quantité en ledit mélange de terpènes dans ledit vin étant comprise entre 0,02 ml et 0,6 ml par litre de vin effervescent.

## Patentansprüche

1. Schaumwein, der durch eine Weinbereitung traditioneller Art erhalten wird, umfassend eine Mischung aus mindestens 20 Terpenen, die dem Wein zugesetzt werden, wobei die Terpene aus Monoterpenen, in einer Menge in dem Bereich von 50 Gew.-% bis 75 Gew.-%, Sesquiterpenen, in einer Menge in dem Bereich von 25 Gew.-% und 50 Gew.-%, ausgewählt sind, wobei die Summe gleich 100 Gew.-% beträgt, wobei Gew.-% die relativen Gewichtsprozente bezogen auf das Gesamtgewicht der Mischung von Terpenen sind, wobei die Menge in der Mischung von Terpenen in dem Wein zwischen 0,02 ml und 0,6 ml pro Liter Schaumwein liegt.

2. Schaumwein nach Anspruch 1, wobei die Terpene in der Mischung die Monoterpene umfassen, die aus den Unterfamilien der azyklischen Monoterpene, der monozyklischen Monoterpene, der bizyklischen Monoterpene, der azyklischen Monoterpenalkohole, der monozyklischen Monoterpenalkohole, der bizyklischen Monoterpenalkohole, der etherzyklischen Monoterpene und der Monoterpenketone ausgewählt sind, wobei die Unterfamilien der Sesquiterpene aus monozyklischen Sesquiterpenen, bizyklischen Sesquiterpenen, azyklischen Sesquiterpenalkoholen und monozyklischen Sesquiterpenalkoholen oder Mischungen davon ausgewählt sind.

3. Schaumwein nach Anspruch 1 oder 2, wobei die Monoterpene ferner Monoterpenoxide umfassen und die Sesquiterpene ferner azyklische Sesquiterpene, trizyklische Sesquiterpene, bizyklische Sesquiterpenalkohole, trizyklische Sesquiterpenalkohole, Sesquiterpenoxide oder Ether von Sesquiterpenen oder Mischungen davon umfassen.

4. Schaumwein nach einem der Ansprüche 1 bis 3, wobei die Monoterpene in einer Menge in dem Bereich von 55 Gew.-% bis 75 Gew.-% zugesetzt werden, die Sesquiterpene in einer Menge in dem Bereich von 30 Gew.-% bis 50 Gew.-%, vorteilhafterweise von 30 Gew.-% bis 45 Gew.-%, zugesetzt werden, wobei die Summe gleich 100 Gew.-% beträgt.

5. Schaumwein nach einem der Ansprüche 1 bis 3, wobei die Monoterpene in einer Menge in dem Bereich von 65 Gew.-% bis 75 Gew.-% zugesetzt werden, die Sesquiterpene in einer Menge in dem Bereich von 25 Gew.-% bis 35 Gew.-% zugesetzt werden, wobei die Summe gleich 100 Gew.-% beträgt.

6. Schaumwein nach einem der Ansprüche 1 bis 3, wobei die Monoterpene in einer Menge in dem Bereich von 50 Gew.-% bis 55 Gew.-% zugesetzt werden, die Sesquiterpene in Mengen von 45 Gew.-% bis 50 Gew.-% zugesetzt werden, wobei die Summe gleich 100 Gew.-% beträgt.

7. Schaumwein nach einem der Ansprüche 1 bis 6, wobei in der Mischung von Terpenen der relative Prozentsatz der azyklischen Monoterpene von 11 % bis 13 % variiert; der relative Prozentsatz der monozyklischen Monoterpene von 12 % bis 25 %, vorzugsweise von 15 % bis 25 %, variiert; der relative Prozentsatz der bizyklischen Monoterpene von 17 % bis 25 % variiert; der relative Prozentsatz der azyklischen Monoterpenalkohole von 14 % bis 25 %, vorzugsweise von 17 % bis 25 %, variiert; der relative Prozentsatz der monozyklischen Monoterpenalkohole von 6 % bis 9 % variiert; der relative Prozentsatz der bizyklischen Monoterpenalkohole von 6 % bis 9 % variiert; der relative Prozentsatz der etherzyklischen Monoterpene von 3 % bis 6 % variiert; der relative Prozentsatz der Monoterpenoxide von 0 % bis 9 % variiert, wobei die Summe der relativen Prozentsätze 100 % beträgt.

8. Schaumwein nach einem der Ansprüche 1 bis 7, wobei in der Mischung von Terpenen der relative Prozentsatz der azyklischen Sesquiterpene von 0 % bis 6 % variiert, der relative Prozentsatz der monozyklischen Sesquiterpene von 18 % bis 22 % variiert, der relative Prozentsatz der bizyklischen Sesquiterpene von 20 % bis 45 %, vorzugsweise von 25 % bis 43 %, variiert; der relative Prozentsatz der trizyklischen Sesquiterpene von 0 % bis 10 % variiert; der relative Prozentsatz der azyklischen Sesquiterpenalkohole von 20 % bis 40 %, vorzugsweise von 25 % bis 35 %, variiert; der relative Prozentsatz der monozyklischen Sesquiterpenalkohole von 5 % bis 20 % variiert; der relative Prozentsatz der bizyklischen Sesquiterpenalkohole von 0 % bis 3 % variiert; der relative Prozentsatz der Sesquiterpenoxide von 0 % bis 6 % variiert, der relative Prozentsatz der Sesquiterpenether von 0 % bis 3 % variiert, wobei die Summe der relativen Prozentsätze 100 % beträgt.

9. Schaumwein nach einem der Ansprüche 1 bis 8, wobei die Menge in der Mischung von Terpenen in dem Wein zwischen 0,03 ml und 0,40 ml pro Liter Schaumwein, mehr bevorzugt zwischen 0,04 ml und 0,15 ml pro Liter Schaumwein, liegt.

10. Verfahren zum traditionellen Weinbereiten eines Schaumweins, umfassend die folgenden Schritte des Weinbereitens der Traube zu stillen Grundweinen, eines Vervollkommnens der Cuvée, eines Zugeben einer Fülldosage, eines zweiten Gärens, eines Rüttelns und eines Degorgierens der Flasche, **dadurch gekennzeichnet, dass** es nach dem Schritt des Degorgierens einen Schritt des Zusetzens einer Versanddosage umfasst, umfassend die Mischung von Terpenen nach einem der Ansprüche 1 bis 9.

11. Verfahren zum Gären eines Schaumweins in geschlossenem Tank, umfassend die folgenden Schritte des Mischens von Grundweinen in Edelstahltanks mit Hefen und einer Gärflüssigkeit, eines kontrollierten Gärens und mindestens drei Wochen lang, bis der Druck den Schwellenwert von 5 bar erreicht, einen Schritt eines Beendens der Gärung durch eine Kühlung, eines Filterns und eines Überführens in Füllbehälter, **dadurch gekennzeichnet, dass** es einen Schritt des Zusetzens der Mischung von Terpenen nach einem der Ansprüche 1 bis 9 während des Schritts des Mischens der Grundweine mit der Gärflüssigkeit umfasst.

12. Verfahren zum Herstellen eines Schaumweins, umfassend einen Schritt des Zusetzens von Kohlendioxid (CO₂) zu dem zuvor stabilisierten und gekühlten Grundwein, der die Mischung von Terpenen nach einem der Ansprüche 1 bis 9 enthält, einen Schritt eines Lösens des CO₂ in dem Wein und einen Schritt eines Abfüllens des Schaumweins in Flaschen.

13. Verfahren zum Herstellen eines Schaumweins, umfassend einen Schritt des Zusetzens von Zucker, Hefen und der Mischung von Terpenen nach einem der Ansprüche 1 bis 9 zu einem Grundwein und einen Schritt eines Haltens des so erhaltenen Weins bei Raumtemperatur, um einen Schaumbildungsprozess herbeizuführen, einen Schritt des Kühlens eines durch den vorherigen Schritt erhaltenen Schaumweins, dann einen Schritt des Filtrierens des Schaumweins.

14. Verwendung einer Mischung aus mindestens 20 Terpenen, in der die Terpene aus Monoterpenen, in einer Menge in dem Bereich von 50 Gew.-% bis 75 Gew.-%, Sesquiterpenen, in einer Menge in dem Bereich von 25 Gew.-% und 50 Gew.-%, ausgewählt sind, wobei die Summe gleich 100 Gew.-% beträgt, wobei Gew.-% die relativen Gewichtsprozente bezogen auf das Gesamtgewicht der Mischung von Terpenen sind, für die Erzeugung eines durch traditionelle Weinbereitung erhaltenen Schaumweins, wobei die Menge in der Mischung von Terpenen in dem Wein zwischen 0,02 ml und 0,6 ml pro Liter Schaumwein liegt.

## Claims

1. A sparkling wine obtained according to a traditional type of winemaking, comprising a mixture of at least 20 terpenes added to said wine, wherein the terpenes are selected from monoterpenes, in an amount ranging from 50% by weight to 75% by weight, sesquiterpenes, in an amount ranging from 25% by weight to 50% by weight, the sum being equal to 100% by weight, the % by weight being the relative weight percentage over the total weight of the mixture of terpenes, the amount of said mixture of terpenes in the wine being between 0.02 mL and 0.6 mL per liter of sparkling wine.

2. The sparkling wine according to claim 1, wherein the terpenes in the mixture comprise monoterpenes selected from the subfamilies of acyclic monoterpenes, monocyclic monoterpenes, bicyclic monoterpenes, acyclic monoterpene alcohols, monocyclic monoterpene alcohols, bicyclic monoterpene alcohols, monoterpene cyclic ethers, and monoterpene ketones, the sesquiterpene subfamilies being selected from monocyclic sesquiterpenes, bicyclic sesquiterpenes, acyclic sesquiterpene alcohols and monocyclic sesquiterpene alcohols, or mixtures thereof.

3. The sparkling wine according to claim 1 or 2, wherein the monoterpenes further comprise monoterpene oxides, and the sesquiterpenes further comprise acyclic sesquiterpenes, tricyclic sesquiterpenes, bicyclic sesquiterpene alcohols, tricyclic sesquiterpene alcohols, sesquiterpene oxides or sesquiterpene ethers, or mixtures thereof.

4. The sparkling wine according to any one of claims 1 to 3, wherein the monoterpenes are added in an amount ranging from 55% by weight to 75% by weight, the sesquiterpenes being added in an amount ranging from 30% by weight to 50% by weight, more advantageously from 30% by weight to 45% by weight, the sum being equal to 100% by weight.

5. The sparkling wine according to any one of claims 1 to 3, wherein the monoterpenes are added in an amount ranging from 65% by weight to 75% by weight, the sesquiterpenes being added in an amount ranging from 25% by weight to 35% by weight, the sum being equal to 100% by weight.

6. The sparkling wine according to any one of claims 1 to 3, wherein the monoterpenes are added in an amount ranging from 50% by weight to 55% by weight, the sesquiterpenes being added in an amount ranging from 45% by weight to 50% by weight, the sum being equal to 100% by weight.

7. The sparkling wine according to any one of claims 1 to 6, wherein in the terpene mixture, the relative percentage of acyclic monoterpenes varies from 11% to 13%; the relative percentage of monocyclic monoterpenes varies from 12% to 25%, preferably from 15% to 25%, the relative percentage of bicyclic monoterpenes varies from 17% to 25%; the relative percentage of acyclic monoterpene alcohols varies from 14% to 25%, preferably from 17% to 25%; the relative percentage of monocyclic monoterpene alcohols varies from 6% to 9%; the relative percentage of bicyclic monoterpene alcohols varies from 6% to 9%; the relative percentage of monoterpene cyclic ethers varies from 3% to 6%; the relative percentage of monoterpene oxides varies from 0% to 9%, the sum of the relative percentages being 100%.

8. The sparkling wine according to any one of claims 1 to 7, wherein in the terpene mixture, the relative percentage of acyclic sesquiterpenes varies from 0% to 6%, the relative percentage of monocyclic sesquiterpenes varies from 18% to 22%, the relative percentage of bicyclic sesquiterpenes varies from 20% to 45%, preferably from 25% to 43%, the relative percentage of tricyclic sesquiterpene varies from 0% to 10%, the relative percentage of acyclic sesquiterpene alcohols varies from 20% to 40%, preferably from 25% to 35%; the relative percentage of monocyclic sesquiterpene alcohols varies from 5% to 20%, the relative percentage of bicyclic sesquiterpene alcohols varies from 0% to 3%; the relative percentage of sesquiterpene oxides varies from 0% to 6%, the relative percentage of sesquiterpene ethers varies from 0% to 3%, the sum of the relative percentages being 100%.

9. The sparkling wine according to any one of claims 1 to 8, wherein the amount of said terpene mixture in the wine is between 0.03 mL and 0.40 mL per liter of sparkling wine, more preferably between 0.04 mL and 0.15 mL per liter of sparkling wine.

10. A traditional winemaking method for making a sparkling wine comprising the following steps of processing grapes into still base wines, creating the cuvée, adding a tirage liqueur, second fermentation, riddling and disgorging of the bottle, **characterized in that** it comprises, after the disgorging step, a step of addition of an expedition liqueur comprising the mixture of terpenes, as defined according to any one of claims 1 to 9.

11. A method of closed-tank fermentation of a sparkling wine comprising the following steps of mixing base wines in stainless steel tanks with yeast and fermentation liquor, under controlled fermentation and for a minimum of three weeks, until the pressure reaches the threshold of 5 bar, a step of cessation of fermentation by cooling, filtration and transfer to tirage tanks, **characterized in that** it comprises a step of adding the terpene mixture, as defined according to any one of claims 1 to 9, during the step of mixing the base wines with said fermentation liquor.

12. A method of preparing a sparkling wine comprising a step of adding carbon dioxide (CO₂) to a previously stabilized and chilled base wine containing the terpene mixture as defined according to any one of claims 1 to 9, a step of dissolving the CO₂ in the wine, and a step of bottling said sparkling wine.

13. A method of preparing a sparkling wine comprising a step of adding sugar, yeast and the mixture of terpenes, as defined according to any one of claims 1 to 9, to a base wine and a step of maintaining said wine thus obtained at an ambient temperature, to result in a froth setting process, a step of refrigerating a sparkling wine obtained by the preceding step, then a step of filtering said sparkling wine.

14. A use of a mixture of at least 20 terpenes, wherein the terpenes are selected from monoterpenes, in an amount ranging from 50% by weight to 75% by weight, sesquiterpenes, in an amount ranging from 25% by weight to 50% by weight, the sum being equal to 100% by weight, the % by weight being the relative weight percentage over the total weight of the mixture of terpenes, to make a sparkling wine obtained by traditional winemaking, the amount of said mixture of terpenes in said wine being between 0.02 mL and 0.6 mL per liter of sparkling wine.
